# EUROPÄISCHE PATENTSCHRIFT

(11) **EP 0 505 599 B1**
(45) Veröffentlichungstag und Bekanntmachung des Hinweises auf die Patenterteilung: **28.06.1995**
(21) Anmeldenummer: 91105052.4
(22) Anmeldetag: 28.03.1991
(51) Int. Cl.: A61C 1/14

(54) **Spannvorrichtung für insbesondere zahnärztliche Werkzeuge**
Clamping device, in particular for dental tools
Dispositif pour le maintien du manche, en particulier d'un instrument de dentisterie

(43) Veröffentlichungstag der Anmeldung: 30.09.1992
(73) Patentinhaber: SIEMENS AKTIENGESELLSCHAFT, 80333 München (DE)
(72) Erfinder: Hain, Johann, W-6148 Heppenheim (DE); Schwarz, Werner, W-6148 Heppenheim (DE)

(56) Entgegenhaltungen:
- EP-A- 0 273 259
- FR-A- 2 509 985
- US-A- 4 015 335

## Beschreibung

Die Erfindung bezieht sich auf eine Spannvorrichtung nach dem Oberbegriff des Patentanspruches 1. Eine solche Spannvorrichtung ist beispielsweise aus der DE-A-36 44 055 (EP-A-0 273 259) bekannt. Bei dieser bekannten Spannvorrichtung übernimmt der von der Handhabe betätigbare Stößel gleichsam auch die Führung des Werkzeugschaftes. Nachdem der Stößel aufgrund seiner Funktion axial frei bewegbar sein soll, kann sich insbesondere bei Fertigungs- und Paßungenauigkeiten eine ungenaue Führung des Werkzeugschaftes mit unrundem Lauf des Werkzeuges einstellen. Die Folge davon sind höhere Laufgeräusche sowie ein stärkerer Verschleiß der Teile. Ein erhöhter Verschleiß ist insbesondere auch darauf zurückzuführen, daß der Stößel nicht gegen Verdrehung gesichert ist.

Der im Anspruch 1 angegebenen Erfindung liegt die Aufgabe zugrunde, demgegenüber eine Verbesserung zu erzielen und eine Spannvorrichtung anzugeben, die eine weitgehend verschleißfreie Werkzeugführung mit optimalem Rundlauf gewährleistet, wodurch sich letztlich auch die Geräuschentwicklung reduzieren läßt.

Dadurch, daß der Werkzeugschaft vorzugsweise an zwei, relativ weit auseinanderliegenden Stellen geführt ist und die Schaftführungen fest mit der Hohlwelle verbunden sind, können die genannten Nachteile, die den bisherigen Ausführungen anhaften, vermieden werden. Die Führung ist vorteilhafterweise als Buchse ausgeführt; sie kann sowohl integraler Bestandteil der Hohlwelle als auch ein separates, mit der Hohlwelle fest verbundenes Bauteil sein.

Die Ausnehmungen zur Durchführung der mit der Handhabe zusammenwirkenden Kraftübertragungsteile der werkzeugfernen Führung können sowohl am Außenumfang als auch am Innenumfang der Führung angeordnet sein. Die werkzeugnahe Führung ist vorteilhafterweise eine Buchse, die ein von der Spannhülse getrenntes Bauteil ist, weil man dann bezüglich der Materialauswahl für die Führungsbuchse frei ist und diese vorteilhafterweise aus gehärtetem Stahl bzw. aus Hartmetall fertigen kann. Diese Materialien können für die Spannhülse nicht verwendet werden. Die werkzeugferne Führung dagegen kann, wie bereits erwähnt, vorteilhafterweise integraler Bestandteil der Hohlwelle sein, indem Hohlwelle und werkzeugferne Führung einstückig ausgebildet sind. Wenn gemäß einer weiteren vorteilhaften Ausgestaltung die werkzeugferne Führung einen die Einschubtiefe des Werkzeugschaftes begrenzenden Anschlag enthält, ist sichergestellt, daß bei Vibrationen die Leichtgängigkeit (Beweglichkeit) des Stößels erhalten bleibt.

Weitere Vorteile ergeben sich aus der nachstehenden Beschreibung mehrerer Ausführungsbeispiele.

Es zeigen:
Figur 1 das Kopfgehäuse eines zahnärztlichen Turbinenhandstückes mit der erfindungsgemäßen Spannvorrichtung im Schnitt, zusammen mit einem im entnommenen Zustand dargestellten Bohrwerkzeug,
Figur 2 die Spannvorrichtung ohne eingesetztem Werkzeug im Schnitt, entlang der Linie II/II in Figur 3,
Figur 3 eine Draufsicht der Spannvorrichtung nach Figur 2,
Figur 4 eine Variante zu der in Figur 2 dargestellten Spannvorrichtung,
Figur 5 eine Draufsicht auf die Spannvorrichtung nach Figur 4.

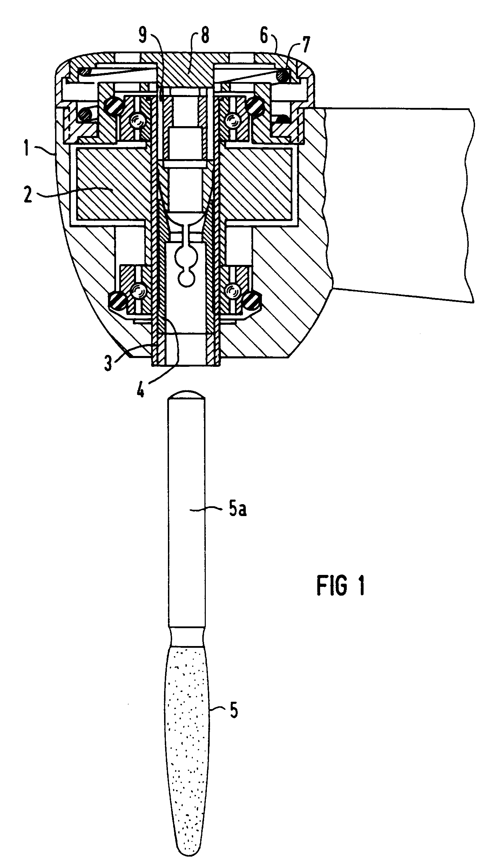

Die Figur 1 zeigt in einer schematischen Darstellung das Kopfgehäuse eines zahnärztlichen Turbinenhandstückes im Schnitt. Im Kopfgehäuse 1 ist in bekannter Weise ein Turbinenrotor 2 drehbar gelagert. Der Turbinenrotor 2 treibt eine hülsenförmige Hohlwelle 3 an, in der eine Spannhülse 4 zur drehfesten Halterung eines mit zylindrischem Schaft 5a versehenen Werkzeuges 5 (Bohrer, Fräser, od.dgl.) austauschbar gehaltert werden kann. Die Halterung erfolgt durch einfaches axiales Einschieben in die Spannvorrichtung. Zur Entnahme des Werkzeuges ist an der dem Werkzeug abgewandten Ende des Kopfgehäuses 1 ein Druckdeckel 6 angeordnet, der bei Betätigung entgegen der Kraft einer Feder 7 mit einem Druckstempel 8 auf einen in der Hohlwelle 3 axial verschiebbar gelagerten Stößel 9 drückt, mit dem, wie später noch näher erläutert wird, die Spannvorrichtung in eine die Entnahme des Werkzeuges 5 gestattende Entspannstellung gebracht werden kann.

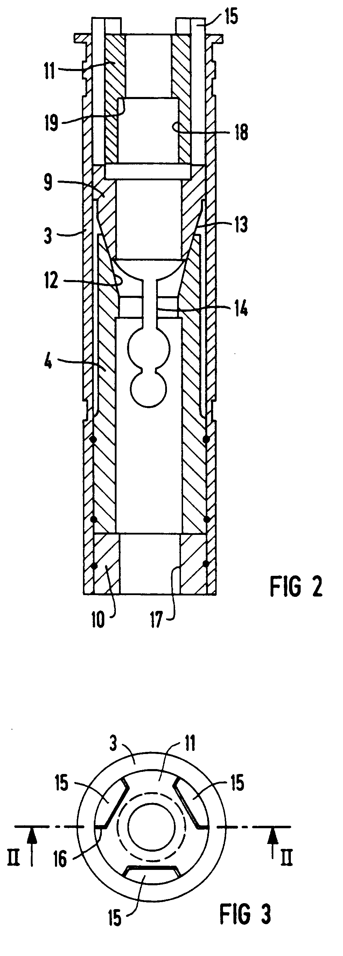

Einzelheiten der Spannvorrichtung einschließlich Hohlwelle und Stößel sind in Figur 2 im Längsschnitt dargestellt, wobei der besseren Übersichtlichkeit wegen das Werkzeug nicht eingezeichnet worden ist.

In der Hohlwelle 3 sind eine untere, werkzeugnahe Führungsbuchse 10, die Spannhülse 4, sowie eine obere, werkzeugferne Führungshülse 11, z.B. durch punktuelles Laserschweißen, befestigt. Der Aufbau der Spannhülse 4 ist aus der eingangs genannten Patentanmeldung hinreichend bekannt, so daß darauf verzichtet werden kann, diesen nochmals näher darzulegen. Bezüglich der Funktion sei erwähnt, daß der mit 12 bezeichnete Innenkonus der Spannhülse 4 mit einem Außenkonus 13 des Stößels 9 so korrespondiert, daß bei eingesetztem Werkzeug der Werkzeugschaft in der Spannstellung von federnden Zungen des Konus 12, welche Kontaktflächen 14 bilden, sicher gehalten wird, in der Entspannstellung dagegen diese Kontaktflächen den Werkzeugschaft für eine Entnahme des Werkzeuges freigeben.

Der Stößel 9 ist axial beweglich in der Hohlwelle 3 gehaltert, so daß er bei Betätigung des Druckdeckels 6 nach unten bewegt wird. Infolge der konischen Verbindung von Stößel und Spannhülse werden die Spannzungen radial nach außen gedrückt, wodurch die Haltekraft an den Kontaktflächen 14 aufgehoben wird. Nach Loslassen des Druckdeckels 6 wird dieser mittels Druckfeder 7 in seine Ausgangsstellung zurückgeführt. Bedingt durch die achsparallel wirkende Kraftkomponente, welche über die schrägen Konusflächen entsteht, wird der Stößel alleine wieder nach oben in seine Ausgangsstellung gedrückt.

Der Stößel 9 weist im Anschluß an den Außenkonus 13 am Umfang drei achsparallel sich erstreckende Stege 15 auf, welche durch Ausnehmungen 16 der werkzeugfernen Führungsbuchse 11 greifen und mit ihren oberen Endteilen mit dem Druckstempel 8 korrespondieren. Fertigungstechnische Vorteile lassen sich erzielen, wenn, wie dargestellt, die Stege 15 und Ausnehmungen 26 sich über einen Winkelbereich von 60° erstrecken und in einer 120°-Teilung am Umfang angeordnet sind.

Sowohl die werkzeugnahe Führungsbuchse 10 als auch die werkzeugferne Führungsbuchse 11 sind zur paßgenauen Aufnahme des Werkzeugschaftes 5a ausgebildet, wobei im dargestellten Ausführungsbeispiel beide Führungsbuchsen eine am Innenumfang geschlossene Mantelfläche 17, 18 aufweisen.

Damit bei Vibrationen die Leichtgängigkeit, also die axiale Beweglichkeit des Stößels erhalten bleibt, ist die Einschubtiefe des Werkzeugschaftes durch einen Anschlag 19 (Figur 2) begrenzt.

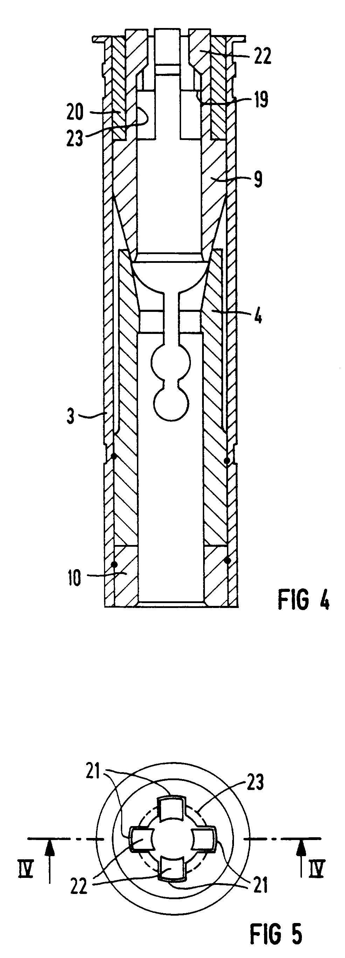

Alternativ zu der vorbeschriebenen Ausführungsform können die Ausnehmungen, durch die die mit dem Druckdeckel zusammenwirkenden Kraftübertragungselemente des Stößels hindurchgreifen, auch am Innenumfang der Führungsbuchse angeordnet sein. Eine solche Alternative zeigen Figuren 4 und 5. Bei dieser Variante ist die wiederum mit der Hohlwelle 3 fest verbundene werkzeugferne Führungsbuchse 20 am Umfang mit mehreren Ausnehmungen 21 versehen, durch die wiederum Stege 22 des Stößels 9 hindurchgreifen. Auch hier ist, wie bei der zuvor beschriebenen Ausführung, eine gute Führung des Schaftendes des Werkzeuges 5 gegeben. Im Gegensatz zu der vorbeschriebenen Ausführung, bei der die Führung durch eine am Innenumfang geschlossene Mantelfläche gebildet ist, ist bei der Variante nach den Figuren 4 und 5 die Mantelfläche 23 am Umfang durch die Ausnehmungen 21 unterbrochen.

Durch die doppelte, fest mit der Hohlwelle verbundene Schaftführung, die gleichzeitig eine Verdrehsicherung für den nur axial beweglichen Stößel darstellt, ergibt sich eine äußerst verschleißfreie Werkzeugführung mit optimalem Werkzeugrundlauf. Die Spannhülse braucht lediglich Haltekräfte für den Werkzeugschaft aufnehmen, sie übernimmt keine Führungsfunktion mehr; diese wird alleine von den fest mit der Hohlwelle verbundenen Führungsbuchsen übernommen.

Dadurch, daß die untere, werkzeugnahe Führungsbuchse 10 baulich von der Spannhülse 4 getrennt ist, kann erstere vorzugsweise aus Hartmetall ausgeführt sein, ein Werkstoff, der für federnde Elemente, wie die vorbeschriebene Spannhülse, nicht vorgesehen werden kann.

## Patentansprüche

1. Spannvorrichtung zum Einspannen von insbesondere zahnärztlichen Werkzeugen (5), mit einem zylindrischen Schaft (5a), enthaltend eine in Drehung versetzbare Hohlwelle (3) zur Aufnahme einer den Werkzeugschaft (5a) haltenden Spannhülse (4), die an ihrem dem Werkzeug abgewandten Ende längsgeschlitzt ist, wodurch am Umfang gesehen zwischen den Schlitzen federnde, den Werkzeugschaft in der Spannstellung festhaltende Zungen gebildet sind, die zwecks Entnahme des Werkzeuges mittels eines axial verstellbaren, von einer Handhabe (6) betätigbaren Stößels (9) radial nach außen in eine Entspannstellung bringbar sind, zu welchem Zweck der Stößel (9) an seinem der Spannhülse (4) zugewandten Ende einen Außenkonus (13) und die Spannhülse (4) einen mit diesen korrespondierenden Innenkonus (12) aufweisen, wobei der Stößel axial frei beweglich in der Hohlwelle geführt, die Spannhülse (4) dagegen axial unbeweglich in der Hohlwelle gehaltert ist, **dadurch gekennzeichnet,** daß eine mit der Hohlwelle (3) fest verbundene Führung (11, 20) vorgesehen ist, die den Werkzeugschaft (5a) zumindest an seinem werkzeugfernen Ende haltert und Mittel (15, 22) enthält, welche einerseits die axiale Beweglichkeit des Stößels gewährleisten und eine Verdrehbarkeit verhindern und andererseits eine Kraftübertragung zwischen Stößel (9) und Handhabe (6) bei deren Betätigung ermöglichen.

2. Spannvorrichtung nach Anspruch 1, **dadurch gekennzeichnet,** daß die Führung integraler Bestandteil der Hohlwelle (3) ist.

3. Spannvorrichtung nach Anspruch 1, **dadurch gekennzeichnet,** daß als Führung eine mit der Hohlwelle (3) fest verbundene Buchse (11, 20) vorgesehen ist.

4. Spannvorrichtung nach Anspruch 3, **dadurch gekennzeichnet,** daß auch das werkzeugnahe Ende des Werkzeugschaftes (5a) in einer mit der Hohlwelle (3) fest verbundenen Führungsbuchse (10) geführt ist, wobei diese Buchse ein von der Spannhülse (4) getrenntes Bauteil ist.

5. Spannvorrichtung nach Anspruch 3 oder 4, **dadurch gekennzeichnet,** daß die Führungsbuchse (10, 11, 20) aus gehärtetem Stahl oder Hartmetall besteht.

6. Spannvorrichtung nach einem der Ansprüche 1 bis 5, **dadurch gekennzeichnet,** daß die werkzeugferne Führungsbuchse (11, 20) mehrere, am Umfang angeordnete, axial sich erstreckende Ausnehmungen (16) enthält, durch die mit der Handhabe (6) zusammenwirkende Elemente (15, 22) des Stößels (9) hindurchgreifen.

7. Spannvorrichtung nach Anspruch 6, **dadurch gekennzeichnet,** daß die Ausnehmungen (16) am Aussenumfang der Führungsbuchse (11) angeordnet sind und die Führung des Werkzeugschaftes durch eine am Innenumfang geschlossene Mantelfläche (18) gebildet ist.

8. Spannvorrichtung nach Anspruch 6, **dadurch gekennzeichnet,** daß die Ausnehmungen (21) am Innenumfang der Führungsbuchse (20) angeordnet sind und die Führung des Werkzeugschaftes durch eine von den Ausnehmungen (21) unterbrochene Mantelfläche (23) gebildet ist.

9. Spannvorrichtung nach einem der Ansprüche 1 bis 8, **dadurch gekennzeichnet,** daß die werkzeugferne Führungsbuchse (11, 20) in die Hohlwelle (3) integriert ist.

10. Spannvorrichtung nach einem der Ansprüche 1 bis 9, **dadurch gekennzeichnet,** daß die werkzeugferne Führungsbuchse (11, 20) einen die Einschubtiefe des Werkzeugschaftes begrenzenden Anschlag (19) enthält.

## Claims

1. Clamping arrangement for clamping, in particular, dental tools (5) having a cylindrical shank (5a), said clamping arrangement containing a hollow shaft (3), which can be set rotating, for the accommodation of a clamping sleeve (4) which holds the tool shank (5a) and which is slit longitudinally at its end remote from the tool, whereby, viewed at the periphery, resilient tongues are formed between the slits, which tongues hold the tool shank fixed in the clamped position and, for the purpose of the removal of the tool, can be brought radially outwards into a release position by means of an axially adjustable plunger (9) which can be operated by a manipulator (6), for which purpose the plunger (9) has an outer cone (13) at its end facing the clamping sleeve (4) and the clamping sleeve (4) has an inner cone (12) which corresponds to said outer cone, with the plunger being guided in an axially and freely movable manner in the hollow shaft, whilst, on the other hand, the clamping sleeve (4) is held in an axially immovable manner in the hollow shaft, characterised in that a guide (11, 20) is provided, which guide is fixedly connected with the hollow shaft (3), holds the tool shank (5a) at least at its end which is remote from the tool and contains means (15, 22) which, on the one hand, guarantee the axial mobility of the plunger and prevent twistability and, on the other hand, render possible a force transmission between plunger (9) and manipulator (6) when the latter is operated.

2. Clamping arrangement according to claim 1, characterised in that the guide is an integral component part of the hollow shaft (3).

3. Clamping arrangement according to claim 1, characterised in that a bushing (11, 20), which is fixedly connected with the hollow shaft (3), is provided as the guide.

4. Clamping arrangement according to claim 3, characterised in that the end of the tool shank (5a) which is close to the tool is also guided in a guide bushing (10) which is fixedly connected with the hollow shaft (3), this bushing being a component part which is separate from the clamping sleeve (4).

5. Clamping arrangement according to claim 3 or 4, characterised in that the guide bushing (10, 11, 20) is made of hardened steel or hard metal.

6. Clamping arrangement according to one of the claims 1 to 5, characterised in that the guide bushing (11, 20), which is remote from the tool, contains several axially extending recesses (16) which are arranged on the periphery and through which engage elements (15, 22) of the plunger (9) which cooperate with the manipulator (6).

7. Clamping arrangement according to claim 6, characterised in that the recesses (16) are arranged on the outer periphery of the guide bushing (11), and the guide of the tool shank is formed by a closed generated surface (18) on the inner periphery.

8. Clamping arrangement according to claim 6, characterised in that the recesses (21) are arranged on the inner periphery of the guide bushing (20) and the guide of the tool shank is formed by a generated surface (23) which is interrupted by the recesses (21).

9. Clamping arrangement according to one of the claims 1 to 8, characterised in that the guide bushing (11, 20) which is remote from the tool is integrated into the hollow shaft (3).

10. Clamping arrangement according to one of the claims 1 to 9, characterised in that the guide bushing (11, 20), which is remote from the tool, contains a stop (19) which limits the depth of insertion of the tool shank.

## Revendications

1. Dispositif de blocage servant notamment à bloquer des outils de dentisterie (5), comportant une tige cylindrique (5a) ayant un arbre creux (3) pouvant être entraîné en rotation et destiné à recevoir une douille de blocage (4), qui retient la tige (5a) de l'outil et qui est fendue longitudinalement à son extrémité éloignée de l'outil de manière à former entre les fentes, lorsqu'on regarde dans la direction périphérique, des languettes élastiques, qui maintiennent fermement la tige de l'outil dans la position bloquée et qui, pour le prélèvement de l'outil au moyen d'un poussoir (9) mobile axialement et pouvant être actionné à l'aide d'une poignée (6), peuvent être amenées radialement vers l'extérieur dans une position de déblocage, ce pour quoi le poussoir (9) comporte un cône extérieur (13) à son extrémité tournée vers la douille de blocage (4), et la douille de blocage (4) comporte un cône intérieur (12) qui correspond à ce cône extérieur, le poussoir étant guidé dans l'arbre creux, de manière à être mobile librement dans la direction axiale, tandis que la douille de blocage (4) est retenue sans possibilité de déplacement axiale dans l'arbre creux, caractérisé par le fait qu'il est prévu un guide (11,20) qui est relié de façon fixe à l'arbre creux (3), qui relient la tige (5a) de l'outil au moins à son extrémité éloignée de l'outil et qui comporte des moyens (15,22) qui d'une part garantissent la mobilité axiale du poussoir et empêchent toute possibilité de rotation, et d'autre part permettent une transmission de force entre le poussoir (9) et la poignée (6), lors de l'actionnement de cette dernière.

2. Dispositif de blocage suivant la revendication 1, caractérisé par le fait que le guide fait partie intégrante de l'arbre creux (3).

3. Dispositif de blocage suivant la revendication 1, caractérisé par le fait qu'il est prévu, comme guide, une douille (11,20) reliée fermement à l'arbre creux (4).

4. Dispositif de blocage suivant la revendication 3, caractérisé par le fait que l'extrémité, qui est proche de l'outil, de la tige (5a) de l'outil est également guidée dans une douille de guidage (10), qui est reliée rigidement à l'arbre creux (3), cette douille étant une pièce distincte de la douille de serrage (4).

5. Dispositif de blocage suivant la revendication 3 ou 4, caractérisé en ce que la douille de guidage (10,11,20) est en acier trempé ou en un métal dur.

6. Dispositif de blocage suivant l'une quelconque des revendications 1 à 5, caractérisé en ce que la douille de guidage (11,20) éloignée de l'outil comporte plusieurs évidements (16) qui sont disposés sur la périphérie, qui s'étendent axialement et dans lesquels s'engagent des éléments (15,22) du poussoir (9), qui coopèrent avec la poignée (6).

7. Dispositif de blocage selon la revendication 6, caractérisé en ce que les évidements (16) sont aménagés sur la périphérie extérieure de la douille de guidage (11) et le guide de la tige de l'outil est formé par une surface latérale (18) fermée sur sa périphérie intérieure.

8. Dispositif de blocage selon la revendication 6, caractérisé en ce que les évidements (21) sont disposés sur la périphérie intérieure de la douille de guidage (20), et le guide de la tige de l'outil est formé par une surface latérale (23) interrompue par les évidements (21).

9. Dispositif de blocage selon l'une des revendications 1 à 8, caractérisé en ce que la douille de guidage (11,20) éloignée de l'outil est intégrée à l'arbre creux (3).

10. Dispositif de blocage selon l'une quelconque des revendications 1 à 9, caractérisé en ce que la douille de guidage (11,20) éloignée de l'outil comporte une butée (19) qui limite la profondeur d'insertion de la tige de l'outil.
